# EUROPEAN PATENT APPLICATION

(11) **EP 4 840 300 A1**
(43) Date of publication of application: **18.11.2026**
(21) Application number: 26171371.3
(22) Date of filing: 09.04.2026
(51) Int. Cl.: A01K 1/06, A01K 13/00

(54) **WHEELED CATTLE CRUSH**

(30) Priority: 16.05.2025 IT 202500011040
(71) Applicant: Spaer di Spagnoli Erminio & C. S.N.C., 25018 Montichiari, (BS) (IT)
(72) Inventor: SPAGNOLI, Claudio, I-25018 Montichiari, BRESCIA (IT)
(74) Representative: Gamba, Alessandro

(57) **Abstract**

The invention is a wheeled cattle crush (1) comprising:
i) a cattle crush structure (2) which develops along a main axis (X-X) comprising an animal space (S) suitable for housing an animal (500) and two working flanks (21', 21") which extend substantially parallel to the main axis (X-X) on the two sides of the animal space (S);
ii) two wheel assemblies (3', 3"), each comprising a wheel (31', 31") and wheel movement means (32', 32").

Each wheel assembly (3', 3") is configurable, by means of the wheel movement means (32', 32'), in a towing configuration and in a working configuration in which the wheel is positioned distally along the work flank (21', 21") with respect to the towing position.

## Description

### Field of application

The present invention relates to a wheeled cattle crush.

"Cattle crush" means a system suitable for housing an animal for performing operations thereon, in particular maintenance operations on the hooves of the animal, capable of decreasing the risk for an operator associated with the animal kicking.

"Wheeled cattle crush" means a cattle crush towable by means of a motor vehicle, i.e., movable once it is connected to a vehicle.

In particular, the wheeled cattle crush of the present invention is suitable for housing a bovine, for example a cow or a bull.

It is known in the field of cattle farming to provide, fixed and wheeled, cattle crushes which allow performing operations on cattle.

The feature of being able to tow known wheeled cattle crushes is particularly advantageous since it allows performing operations on the bovine without moving it from the farm or, in any case, from the environment in which it is located by going with the wheeled cattle crush to the site. It is in fact known that forcing a bovine to move from the farm where it is located generates elevated stress levels in the animal, which may compromise the health and welfare thereof.

The wheeled cattle crushes of the prior art therefore comprise wheels that can allow the towing thereof. Such wheels however are an obstacle during the operations for an operator on the hooves of the bovine.

In the known solutions, the operator, who in order to access the inner space of the wheeled cattle crush to perform operations on the hooves of the animal, requires space along the outer sides of the wheeled cattle crush, finds the wheels to be an obstacle.

Consequently, the presence of the wheels is detrimental since it reduces the maneuvering space for the operator and strips the operator of the possibility of performing the operations on the animal effectively.

### Solution of the invention

Therefore, there is a strongly felt need to provide a wheeled cattle crush capable of overcoming the conventional drawbacks of the background art.

In particular, the object of the present invention is to provide a wheeled cattle crush in which the wheels are not an obstacle to the operations of the operator, without affecting the towing operations of the wheeled cattle crush itself.

Such a need is met by a wheeled cattle crush according to claim 1. The claims dependent thereon describe preferred or advantageous embodiments of the invention, involving further advantageous aspects.

### Description of the drawings

The features and advantages of the wheeled cattle crush according to the invention will become apparent from the following description of some preferred exemplary embodiments, given by way of non-limiting indication, with reference to the accompanying drawings, in which:

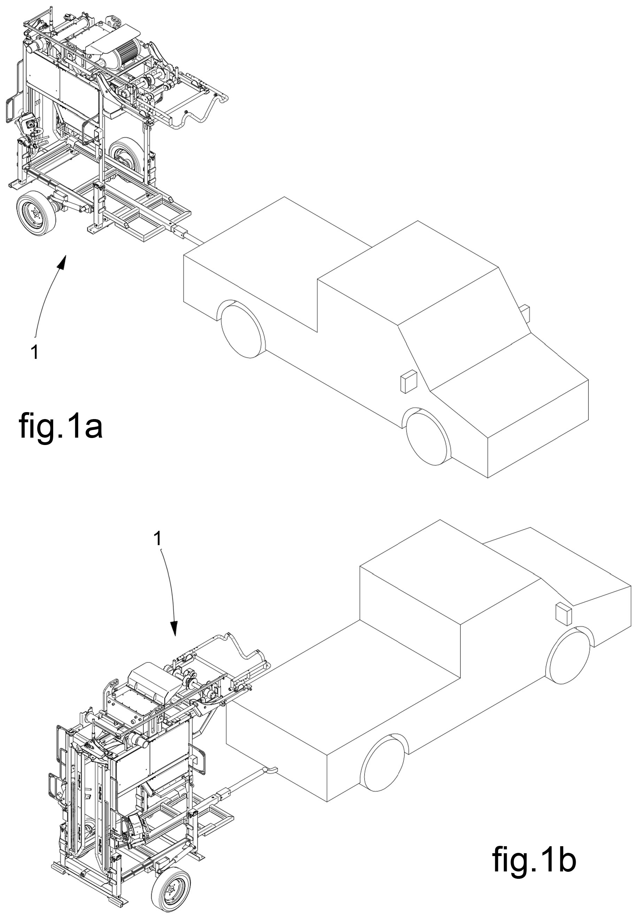

- Figures 1a and 1b show two perspective views of a wheeled cattle crush in accordance with the present invention, connected to a schematically illustrated vehicle;

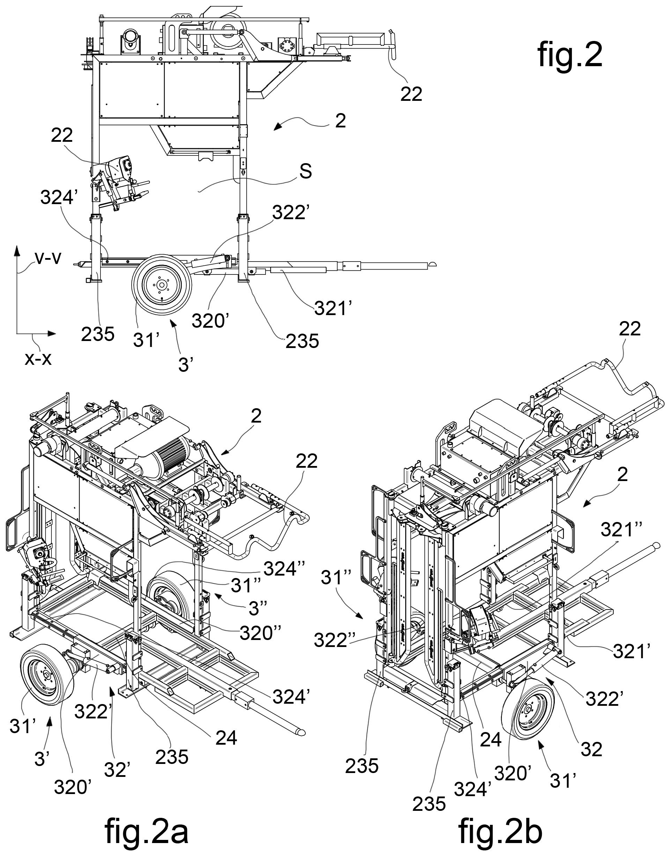

- Figure 2 shows a side view of the wheeled cattle crush of Figures 1a and 1b, in a towing configuration;
- Figures 2a and 2b are two perspective views of the wheeled cattle crush of Figure 2;

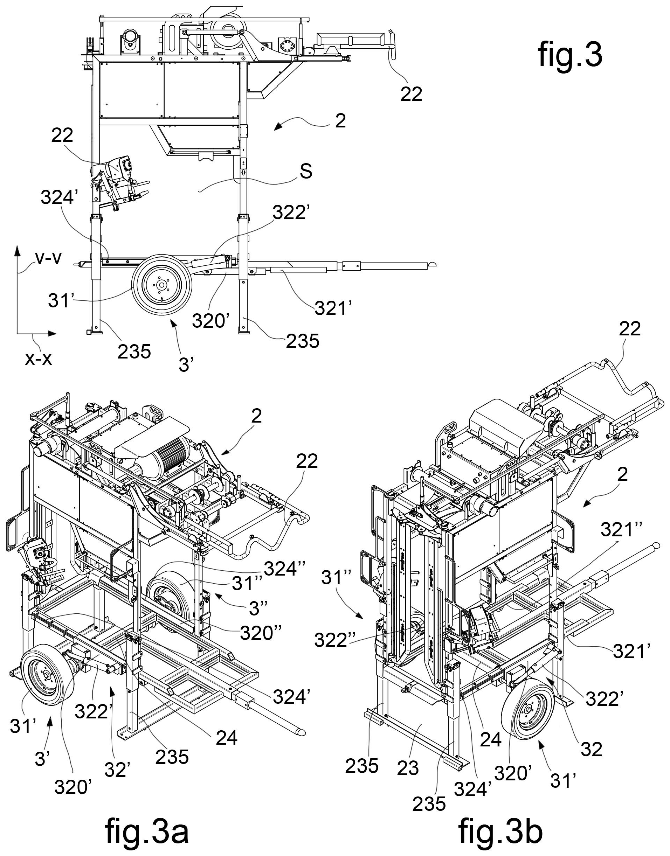

- Figure 3 shows a side view of the wheeled cattle crush of Figures 1a and 1b, in a raised configuration, and wheels in a towing configuration;
- Figures 3a and 3b are two perspective views of the wheeled cattle crush of Figure 3;

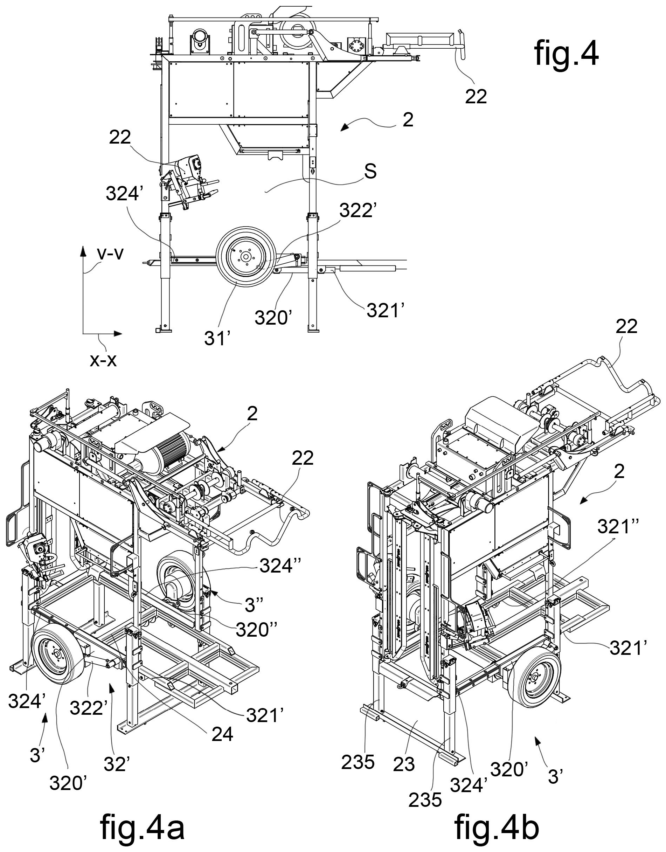

- Figure 4 shows a side view of the wheeled cattle crush of Figures 1a and 1b, in a raised configuration, and wheels in a vertically raised position;
- Figures 4a and 4b are two perspective views of the wheeled cattle crush of Figure 4;

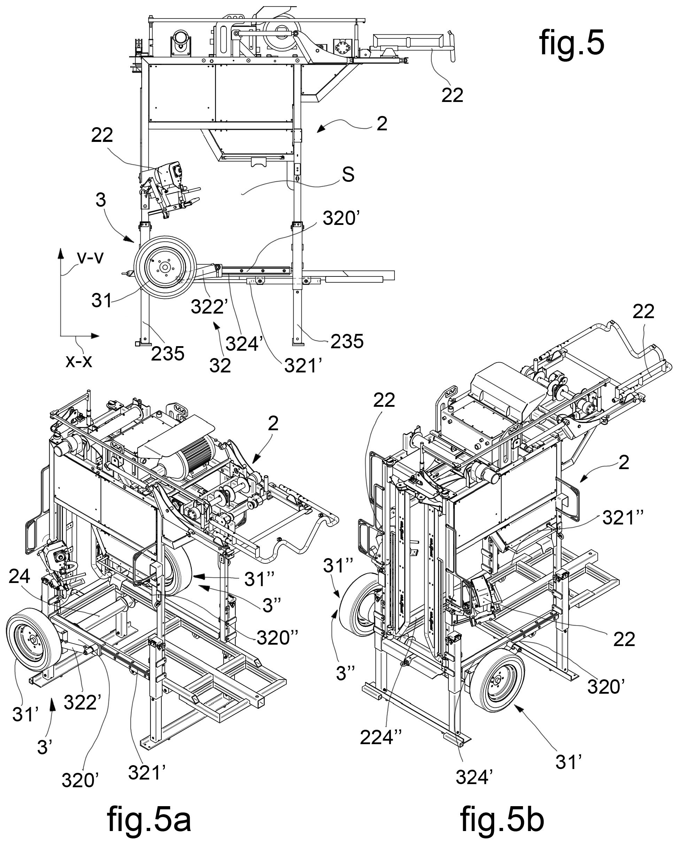

- Figure 5 shows a side view of the wheeled cattle crush of Figures 1a and 1b, in a raised configuration, and wheels in a vertically raised position and moved horizontally, i.e., corresponding to the working configuration;
- Figures 5a and 5b are two perspective views of the wheeled cattle crush of Figure 5;

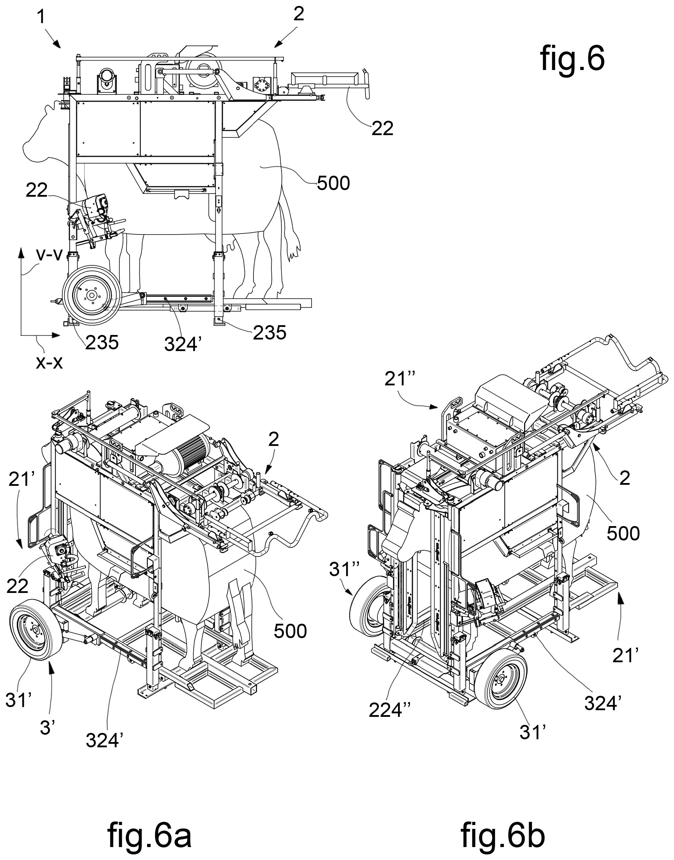

- Figure 6 shows a side view of the wheeled cattle crush of Figures 1a and 1b, with a dummy of a bovine on board;
- Figures 6a and 6b are two perspective views of the wheeled cattle crush of Figure 6.

### Detailed description

With reference to the aforesaid figures, reference numeral 1 indicates a wheeled cattle crush as a whole.

In accordance with the invention, the wheeled cattle crush 1 comprises a cattle crush structure 2; such a cattle crush structure 2 develops along a main axis X-X.

According to a preferred embodiment, the cattle crush structure 2 comprises a plurality of drawn and/or extruded sections mutually joined to one another.

According to a preferred embodiment, the cattle crush structure 2 comprises protective casings and/or sheets.

In accordance with the invention, the cattle crush structure 2 comprises an animal space S.

Preferably, said animal space S is intended to be occupied by an animal 500 during operations for an operator.

Preferably, animal 500 is a bovine.

Preferably, the animal space S is sufficiently large to house a bovine comfortably.

In accordance with the invention, the cattle crush structure 2 comprises two working flanks 21', 21" which extend substantially parallel to the main axis X-X. Said two working flanks 21', 21" extend on the sides of the animal space S.

Preferably, said working flanks 21', 21" are the area of the wheeled cattle crush 1 where the operator gains access to perform operations on animal 500. Preferably, when required, the operator accesses the animal space S from a side or from above, through the right flank or through the left flank, in such a way as to perform the operations on the animal both on the left side and on the right side of animal 500.

Preferably, the operations are performed on the front hooves of animal 500. Preferably, access to the front hooves of animal 500 is via the flanks.

In accordance with the invention, the wheeled cattle crush 1 further comprises two wheel assemblies 3', 3", each comprising a wheel 31', 31" and wheel movement means 32', 32".

In accordance with the invention, each wheel assembly 3', 3" is configurable, by means of the wheel movement means 32', 32", in a towing configuration and in a working configuration.

In accordance with the invention, in the towing configuration, the respective wheel 31', 31" is positioned in a towing position in such a way as to allow the towing of the wheeled cattle crush 1. In other words, the towing position of wheel 31', 31" corresponds to a lowered position, where wheel 31', 31" touches the ground to allow the towing of the wheeled cattle crush 1 by a motor vehicle.

According to a preferred embodiment, the towing position of wheel 31', 31" corresponds to a substantially barycentric position with respect to the entire wheeled cattle crush 1.

In accordance with the invention, in the working configuration, wheel 31', 31" is positioned distally along the working flank 21', 21" with respect to the towing position, so as to allow access for an operator to the animal space S to perform operations on animal 500.

In particular, "distally along the flank" means that the position of wheel 31', 31" is in a different position with respect to the towing configuration, remaining substantially proximal to the respective flank.

In a preferred embodiment, in the transition between the towing configuration and the working configuration, the wheel movement means 32', 32" move the respective wheel 31', 31" for at least one horizontal segment parallel to the main axis X-X.

In a preferred embodiment, in the transition between the towing configuration and the working configuration, the wheel movement means 32', 32" move the respective wheel 31', 31" for at least one vertical segment substantially orthogonal to the main axis X-X.

According to a preferred embodiment, each wheel 31', 31" is moved in translation.

According to a preferred embodiment, each wheel 31', 31" is moved in roto-translation.

According to a preferred embodiment, each wheel 31', 31" is moved so as to keep the rotation axis thereof always parallel to the ground.

In a preferred embodiment, the wheel movement means 32', 32" are pneumatically operated.

"Pneumatically operated" means that the wheel movement means 32', 32" comprise at least one cylinder-piston system, where the respective wheel 31', 31" comprised in the wheel assembly 3', 3" is engaged with at least one piston.

In accordance with a preferred embodiment, the at least one piston performs a pushing action on the respective wheel 31', 31" to allow the transition between the towing configuration and the working configuration.

According to a preferred embodiment, the wheel movement means 32', 32" comprise a first piston 321', 321" suitable for moving the respective wheel 31', 31" for a horizontal segment parallel to the main axis X-X.

Preferably, both the right wheel movement means and the left wheel movement means comprise a first piston 321', 321".

According to a preferred embodiment, the wheel movement means 32', 32" comprise at least a second piston 322', 322" suitable for moving the respective wheel 31', 31" for a vertical segment orthogonal to the main axis X-X.

Preferably, the right wheel movement means and the left ones share the same second piston 322', 322".

Preferably, both the right wheel movement means and the left ones comprise a second piston 322', 322".

The presence of cylinder-piston systems allows the respective wheel 31', 31" to perform a plurality of movements.

For example, the path of wheel 31', 31" occurs in translation in a straight line.

For example, the path of wheel 31', 31" occurs in roto-translation, where roto-translation means that the respective wheel 31', 31" performs at least one portion of movement by rotating with respect to a fulcrum, and at least one portion of movement in a straight line.

In accordance with a preferred embodiment, the wheel movement means 32', 32" comprise an articulated kinematic group 320', 320".

Preferably, the articulated kinematic group 320', 320" comprises a plurality of rigid elements connected by means of joints that allow relative movements of the rigid elements themselves.

Preferably, the articulated kinematic group 320', 320" comprises a crosspiece element or a plurality of crosspiece elements.

Preferably, the respective wheel 31', 31" is engaged by at least one rigid element and is moved by means of the relative action of the articulated kinematic group 320', 320" on which the at least one piston acts.

In accordance with a preferred embodiment, the wheel movement means 32', 32" comprise sliding guides 324', 324".

Preferably, the sliding guides 324', 324" guide the movement of the respective wheel 31', 31" during the movement thereof enabled by the cylinder-piston systems.

Preferably, the sliding guides 324', 324" are profiles.

Preferably, the sliding guides 324', 324" are "U", or **"C",** or "T" profiles.

Preferably, the sliding guides 324', 324" are crosspieces with a tubular section.

In a preferred embodiment, the cattle crush structure 2 comprises a hoof locking device 22, suitable for housing and locking a leg of animal 500 close to the respective flank 21', 21", for an operator to perform the operations on the hoof.

Preferably, the cattle crush structure 2 comprises two front hoof locking devices 22.

Preferably, the cattle crush structure 2 comprises two rear hoof locking devices 22.

In a preferred embodiment, the cattle crush structure 2 comprises four hoof locking devices, i.e., one hoof locking device 22 for each hoof of animal 500.

Preferably, the cattle crush structure 2 comprises a single rear hoof locking device 2 on which the hind legs of animal 500 are positionable.

In such an embodiment, the hoof locking devices are configurable to lock the respective leg simultaneously or alternately, depending on the requirements of operator. Simultaneous mode means that more than one leg of animal 500 is locked simultaneously, while alternating mode means that only one leg of animal 500 is locked by the respective hoof locking device 22.

According to a preferred embodiment, the hoof locking device 22 engages at least one leg of animal 500 so that the respective hoof is kept in the same position, and in such a way that in the working configuration, the wheel is not in a position that hinders the operator during operations on animal 500.

In particular, the hoof locking device 22 forces animal 500 to bend the respective leg so that the leg protrudes with respect to the working flank 21', 21". Such a configuration of the leg of animal 500 is advantageous for the operator since it further facilitates the operations on the hoof of animal 500. In particular, such a configuration of the leg facilitates operations because it allows the operator to have more space and to prevent sudden movements by animal 500, which could be dangerous for the operator and the animal itself.

In a preferred embodiment, the cattle crush structure 2 comprises a vertical movement group 23 suitable for moving the wheeled cattle crush 1 in height, preferably parallel to a vertical axis V-V substantially orthogonal to the main axis X-X, between a lowered cattle crush configuration and a raised cattle crush configuration.

Preferably, the wheeled cattle crush 1 is thus configurable raised off the ground to facilitate the operations for the operator.

Preferably, in the lowered cattle crush configuration, the wheels 31', 31" comprised in the two wheel assemblies 3', 3" are in contact with the ground.

Preferably, in the raised cattle crush configuration, the wheels 31', 31" comprised in the two wheel assemblies 3', 3" are not in contact with the ground.

In a preferred embodiment, in the raised cattle crush configuration, each wheel assembly 3', 3" is configurable in the towing configuration or in the working configuration.

In other words, once raised, and therefore spaced apart from the ground, the wheels 31', 31" comprised in the two wheel assemblies 3', 3" are moved between the towing configuration and the resting configuration (and vice versa) .

In a preferred embodiment, the vertical movement group 23 comprises four pushing elements 235, positionable in a retracted position and in an extended position, the latter suitable for detaching the wheeled cattle crush 1 from the ground by means of a pushing action.

Preferably, said pushing elements 235 are pneumatically operated.

In the preferred embodiment where the vertical movement group 23 comprises four pushing elements 235, in the transition between the lowered cattle crush configuration and the raised cattle crush configuration, the four pushing elements 235 push the wheeled cattle crush 1 simultaneously to allow a uniform lifting of the wheeled cattle crush 1 itself.

Preferably, uniform thrust means that none of the pushing elements 235 applies a push on the wheeled cattle crush 1 greater or less than that of the other pushing elements 235 so as to prevent the undesired tilting of the wheeled cattle crush 1 during the raising or lowering step. In other words, all four pushing elements 235 apply the same push on the wheeled cattle crush 1 during the raising and lowering step.

In a preferred embodiment, the cattle crush structure 2 comprises a transverse axle 24 engaged with the two wheel assemblies 3', 3" to move them simultaneously.

Said transverse axle 24 allows the coordinated movement of the wheel assemblies 3', 3" along the respective working flanks 21', 21" so as to make the transition between the towing configuration and the resting configuration more efficient.

For example, said transverse axle 24 may be engaged with the wheels 31', 31" comprised in the wheel assemblies 3', 3".

For example, said transverse axle 24 may be engaged with the wheel movement means 32', 32".

For example, said transverse axle 24 may be in one piece. Alternatively, said transverse axle 24 may comprise a plurality of elements mutually engaged with one another.

According to a preferred embodiment, the at least a second piston 322', 322" acts on said axle.

Innovatively, the present invention solves the drawbacks of typical wheeled cattle crushes of the prior art.

Advantageously, the wheeled cattle crush allows the improved management of the space along the flanks of the cattle crush, leaving as much freedom as possible for the operator to perform operations on the hooves of the animal.

Advantageously, the wheeled cattle crush comprises wheel assemblies that allow towing, and thus transporting, the cattle crush itself without being limited in the choice of the wheels, for example as to the size of the wheels, allowing simple and effective management of the movement thereof.

Advantageously, the wheel movement means effectively move the wheels along the working flanks, according to a plurality of trajectories and movements.

Advantageously, the pneumatically operated means allow safe and effective movement of the wheels, capable of handling even large loads resulting from the weight of the wheels.

Advantageously, the articulated kinematic group allows a complex and articulated movement of the wheels.

Advantageously, the hoof locking device allows the effective locking of the leg of the animal to facilitate the operations for the operator, ensuring safety for both the animal and the operator, allowing the leg of the animal to be rotated, moving it away from the working flank to facilitate the operations.

Advantageously, the vertical movement group allows a simple and effective raising of the wheeled cattle crush, to allow a smooth transition of the wheels assembly between the towing configuration and the working configuration.

Advantageously, the transverse axle allows simultaneous, fast, and efficient movement of the two wheel assemblies, allowing a simultaneous, and therefore faster and more efficient, transition for the two wheel assemblies between the towing configuration and the working configuration.

It is apparent that in order to meet specific needs, those skilled in the art could make variations to the embodiments of the aforesaid wheeled cattle crush or replace elements with others which are functionally equivalent.

Such variants are also comprised within in the scope of protection as defined by the following claims. Moreover, each variant described as belonging to a possible embodiment can be implemented independently of the other variants described.

### List of reference numerals:

1 wheeled cattle crush;
2 cattle crush structure;
21', 21" working flanks;
22 hoof locking device;
23 vertical movement group;
235 pushing elements;
24 transverse axle;
3', 3" wheel assemblies;
31', 31" wheel;
32', 32" wheel movement means;
320', 320" articulated kinematic groups;
321', 321" first pistons;
322', 322" second pistons;
324', 324" sliding guide;
500 animal;
X-X main axis;
V-V vertical axis.

## Claims

1. A wheeled cattle crush (1) comprising:
i) a cattle crush structure (2) which develops along a main axis (X-X) comprising an animal space (S) suitable for housing an animal (500) and two working flanks (21', 21") which extend substantially parallel to the main axis (X-X) on the two sides of the animal space (S);
ii) two wheel assemblies (3', 3"), each comprising a wheel (31', 31") and wheel movement means (32', 32");
wherein each wheel assembly (3', 3"), by means of the wheel movement means (32', 32"), is configurable in:
- a towing configuration in which the wheel is positioned in a towing position in such a way as to allow the towing of the wheeled cattle crush (1); and
- a working configuration in which the wheel is positioned distally along the working flanks (21', 21") with respect to the towing position, so as to allow the access for an operator to the animal space (S) to perform operations, for example on the hooves, on the animal (500).

2. Wheeled cattle crush (1) according to claim 1, wherein in the transition between the towing configuration and the working configuration, the wheel movement means (32', 32") move the respective wheel (31', 31") for at least one horizontal segment parallel to the main axis (X-X).

3. Wheeled cattle crush (1) according to any one of the preceding claims, wherein in the transition between the towing configuration and the working configuration, the wheel movement means (32', 32") move the respective wheel (31', 31") for at least one vertical segment orthogonal to the main axis (X-X).

4. Wheeled cattle crush (1) according to any one of the preceding claims, wherein the wheel movement means (32', 32") are pneumatically operated.

5. Wheeled cattle crush (1) according to claim 4, wherein the wheel movement means (32', 32") comprise a first piston (321', 321") suitable for moving the respective wheel (31', 31") for a horizontal segment parallel to the main axis (X-X).

6. Wheeled cattle crush (1) according to claim 4, wherein the wheel movement means (32', 32") comprise a second piston (322', 322") suitable for moving the respective wheel (31', 31") for a vertical segment orthogonal to the main axis (X-X).

7. Wheeled cattle crush (1) according to any one of the preceding claims, wherein the wheel movement means (32', 32") comprise an articulated kinematic group (320', 320"), wherein each wheel (31', 31") is engaged with a respective articulated kinematic group.

8. Wheeled cattle crush (1) according to any one of the preceding claims, wherein the cattle crush structure (2) comprises a hoof locking device (22), suitable for housing and locking a leg of the animal (500) in proximity to the respective working flanks (21', 21"), to allow the operator to perform operations on the hoof of the animal.

9. Wheeled cattle crush (1) according to claim 8, wherein the cattle crush structure (2) comprises two front hoof locking devices (22).

10. Wheeled cattle crush (1) according to claim 8 or claim 9, wherein the cattle crush structure (2) comprises at least one, preferably two, rear hoof locking device (22).

11. Wheeled cattle crush (1) according to any one of the preceding claims, wherein the cattle crush structure (2) comprises a vertical movement group (23), suitable for moving the wheeled cattle crush (1) in height, preferably parallel to a vertical axis (V-V) substantially orthogonal to the main axis (X-X), between a lowered cattle crush configuration and a raised cattle crush configuration.

12. Wheeled cattle crush (1) according to claim 11, wherein in the raised cattle crush configuration each wheel assembly (3', 3") is configurable in the towing configuration or in the working configuration.

13. Wheeled cattle crush (1) according to claim 11 or 12, wherein the vertical movement group (23) comprises four pushing elements (235) which positionable in a retracted position and in an extended position, the latter suitable for detaching the wheeled cattle crush (1) from the ground by means of a pushing action.

14. Wheeled cattle crush (1) in accordance with any one of the preceding claims, wherein the cattle crush structure (2) comprises a transverse axle (24) engaged with the two wheel assemblies (3', 3") for moving them simultaneously.
